# EUROPÄISCHE PATENTSCHRIFT

(11) **EP 1 414 606 B1**
(45) Veröffentlichungstag und Bekanntmachung des Hinweises auf die Patenterteilung: **21.03.2007**
(21) Anmeldenummer: 02774507.4
(22) Anmeldetag: 08.08.2002
(51) Int. Cl.: B23B 1/00

(54) **VIELSCHNEIDIGES ROTATIONSWERKZEUG**
MULTIPLE CUTTING EDGE ROTARY TOOL
OUTIL ROTATIF A PLUSIEURS TRANCHANTS

(30) Priorität: 08.08.2001 DE 10139064
(43) Veröffentlichungstag der Anmeldung: 06.05.2004
(73) Patentinhaber: Johne + Co. Präzisionswerkzeuge GmbH, 46286 Dorsten (DE)
(72) Erfinder: JOHNE, Frank, 01516 Grossenhain-Zschauitz (DE)
(74) Vertreter: Effert, Bressel und Kollegen
(86) Internationale Anmeldenummer: PCT/EP2002/008896
(87) Internationale Veröffentlichungsnummer: WO 2003/013769

(56) Entgegenhaltungen:
- US-A- 2 138 727
- US-A- 3 664 755
- US-A- 4 692 069
- US-A- 4 772 159

## Beschreibung

Die Erfindung betrifft ein vielschneidiges Rotationswerkzeug mit radialer Einzelverstellung jeder Schneide oder mit einer Zentralyerstellung für alle Schneiden gemeinsam.

Aus der DE 198 27 778 A1 ist ein Rotationswerkzeug bekannt, bei dem mittels Stellschraube eine Schneide auf einer Parallelfeder radial feinfühlig ohne stick-slip-Effekt verstellbar ist.
Das Werkzeug ist als Einschneider konzipiert; mehrere Schneiden können auf einem Träger hintereinander angeordnet werden. Es ist insbesondere für kleine Bohrungen verwendbar.

Ein solches Werkzeug stellt eine klein bauende Einheit dar. Seine Abmessungen lassen sich so wählen, dass es auch für geringe Bohrlochdurchmesser geeignet ist. Dabei ist ohne weiteres auch eine axiale Einstellbarkeit zu verwirklichen, wie sie vielfach notwendig ist, um z.B. stufenförmige Bohrungen zu erzeugen. Bei alle dem zeichnet sich das Werkzeug aber durch eine besonders vorteilhafte Einstellbarkeit in radialer Richtung aus, ohne dass dabei nicht erwünschte Beeinflussungen anderer Größe, insbesondere des Einstellwinkels, eintreten. Dies ist in einer Ausführungsform durch die Ausbildung des Halters als parallele Biegefeder-Anordnung erreicht. Darunter ist eine Ausgestaltung zu verstehen, bei der unter Anwendung einer elastischen Biegung von Partien des Halters dessen Kopfteil, d.h. der die Schneidplatte tragende Teil, im Wesentlichen eine Parallelverschiebung zu sich selbst erfährt.

Die Ausbildung läßt sich so treffen, dass der Halter im ausgelenkten Zustand im Wesentlichen unbelastet ist und eine elastische Rückstellkraft, die einer Auslenkung entgegenwirkt, erst entsteht, wenn die Verstellvorrichtung aus einer Null- oder Ausgangsposition heraus betätigt wird. Mit besonderem Vorteil wird aber der Halter bereits im nicht ausgelenkten Zustand schon unter Vorspannung gehalten, so dass von vornherein eine Spielfreiheit gewährleistet ist. Dies läßt sich dadurch erreichen, dass der eine Feder bildende Halter fest mit dem Basiskörper verschraubt wird und dabei unmittelbar an der Stellschraube anliegt.

Für die zu dieser Parallelfeder-Ausbildung vorgesehene Durchbrechung bestehen verschiedene Ausführungsmöglichkeiten, namentlich solche mit Ausnehmung in den Eckbereichen, die Kerbspannungen verhindern. Bei einer sehr günstigen Ausführungsform hat die Durchbrechung im Wesentlichen die Form eines U mit zentraler Befestigungszunge.
Die Verstellvorrichtung ist als Schraube ausgebildet, die in ein Gewinde des Basisteiles eingreift und sich am Basisteil abstützt. Bei einer besonders zweckmäßigen Ausführungsform weist die Stellschraube mit dem Halter eine solche Keilflächenpaarung auf, dass keine Selbsthemmung eintreten kann. Dadurch können beim Drehen der Schraube in Löserichtung infolge der hohen Vorspannung die Keilflächen gleiten, d.h. der Halter bleibt stets in Anlage an der Schraube.
Die Keilflächenpaarung zwischen Halter und Verstellschraube kann beispielsweise durch einen balligen oder konischen Abschnitt der Schraube, gepaart mit vertikalem Abschnitt des Halters aber auch umgekehrt oder durch Mischformen erzeugt werden. Wichtig ist der direkte Kontakt der Elemente und deren Wirkrichtung zueinander.
Mit einer derartigen Verstellvorrichtung ist es möglich, die Schneidplatte radial feiner als 3 µm auszulenken und entsprechend genaue Bohrungen zu erzeugen. Die Wiederholgenauigkeit ist so exakt, dass die Bewegung der Verstellschraube an einer daran angeordneten ringförmigen Skalierung relativ zu einem Bezugspunkt am Basiskörper einer entsprechenden Radialverstellung der Schneide zugeordnet werden kann. Ein Bogenmaß von 1 mm an der Schraube entspricht z.B. 1/1000 mm an der Schneide. Diese Wiederholgenauigkeit ist Voraussetzung, um die von DIN/ISO 9000 ff. geforderten Qualitätsbedingungen einzuhalten.
Die Verwendung einer derartigen Bauform für andere Bohrzwecke ist nicht offenbart; insbesondere sollen Bohrdurchmesser von etwa 10 bis 50 mm realisiert werden.

Aus der US 4,692,069 its ein mehrschneidiges Rotationswerkzeug bekannt, bei dem jede Schneide unabhängig von der anderen in axialer und radialer Richtung mit sehr kleinen Toleranzen von 1/1000 mm eingestellt werden kann.
Offenbart ist weder eine stick-slip-freie Verstellbarkeit einzelner Schneiden, was bei der gewählten Art der Maschinenelemente wohl auch nicht möglich ist, noch eine zentrale Verstellung aller Schneiden.

Aus den US Patenschriften 2,138,727 und 3,664,755 sind vielschneidige Rotationswerkzeuge mit einer simultanen Verstellbarkeit der Schneiden über eine zentrale Stelleinrichtung bekannt, im ersten Fall bei einem Aufbohrwerkzeug und im zweiten Fall bei einer Reibahle.
Beim Aufbohrwerkzeug wird im Werkzeugkörper in einer Gewindebohrung eine entsprechende Hülse mit Außengewinde zentral axial verstellt. Der konische Kopf der Hülse bewegt fliegend gelagerte sich spreizende Arme mit endseitig angeordneten Topfschneiden axial und zugleich radial voran, soweit es eine sich öffnende Führung innerhalb des Werkzeugkörpers zulässt und erhöht oder verringert so den Bohrdurchmesser. Zur Sicherung der Schneidenposition werden das Außengewinde mittels Madenschraube und die Arme durch eine diese in der Spreizposition von innen fixierende Druckschraube festgesetzt. Die Verstellung von einem Bohrdurchmesser zum anderen erfordert das Lösen der fixierenden Schrauben und das axiale Verstellen der Gewindehülse, was naturgemäß aufwändig, zeitraubend und ungenau ist.
Im Falle der Reibahle werden sechs radial angeordnete Messer in für sich bekannter Weise stufenweise axial entlang eines Konus als Widerlager versetzt und durch eine zentrale Schraube geklemmt.

Von daher liegt der Erfindung das Problem zugrunde, eine derartige günstige Bauform nach dem Stand der Technik auch für andere Werkzeuge zu nutzen.
Das Problem wird erfindungsgemäß durch die Merkmale des Anspruches 1 gelöst. Vorteilhafte Weiterbildungen der Erfindung sind in den abhängigen Ansprüchen erfasst.

Die Lösung umfasst ein vieleschneidiges Rotationswerkzeug für die spanabhebende Bearbeitung mit mehreren Haltern, die im vorderen Teil Aufnahmen für Schneidplatten und im Bereich zwischen ihren Enden ein Loch zum Durchtritt einer Befestigung aufweisen, mit der jeder Halter auf einem Träger festlegbar ist, wobei jeder der Halter einzeln radial an seinem die Schneidplatte tragenden Teil mittels einer Verstellvorrichtung relativ zu einer Abstützung elastisch auslenkbar ist.
Die Zahl der Schneiden kann 3, 5, 7 oder ein anderes Vielfaches betragen, wobei die Zahl so zu wählen ist, dass bei dem Schneiden einer Bohrung, wobei jede Schneide den Vollkreis schneidet, keine Rattermarken erzeugt werden.
Ein solches Werkzeug kann vorteilhaft beispielsweise für Zylinderbohrungen in Fahrzeugmotoren eingesetzt werden, insbesondere auch auf Transferstraßen. Dabei werden die einzelnen Schneiden auf den gewünschten Durchmesser voreingestellt und können bei Bedarf in Betrieb jeweils nachgestellt werden durch eine einzelne Verstellvorrichtung an jeder Keilflächenpaarung für jede Schneide. Abgesehen von der spezifischen Problematik des Unterbringens der Vielzahl der Schneiden mit einer derartigen Parallel-Federanordnung am Umfang einer Bohrstange oder eines Werkzeugkopfes steht noch das Problem, die zusammenwirkenden Schneiden eindeutig vorspannen zu können. Wie für sich aus dem Stand der Technik schon bekannt, wird der Halter jeder Schneide mit einer Vorspanneinrichtung versehen, die vom Umfang des Werkzeugs her zugänglich und einstellbar ist, nachdem der Halter prinzipiell am Werkzeugkopf fixiert wurde. Damit werden primär die Fertigungstoleranzen ausgeglichen, während die Verstellvorrichtung für die Durchmesseranpassung benutzt wird.

Ein derartiges vielschneidiges Rotationswerkzeug kann mit einer speziellen Verstelleinrichtung versehen sein, die als zentrale Stellschraube ausgebildet ist, welche als achsial verstellbare Differenzschraube über einstellbare Druckstücke, die sich an einem Kegel auf der Differenzschraube abstützen, mittels einer Hubbewegung den Halter relativ zu seinem Träger radial in Position bringen. Hier werden also die für jeden Halter einzeln vorgesehenen Verstellvorrichtungen ersetzt durch Druckstücke, die durch eine zentrale Verstelleinrichtung bewegt werden und die elastische Auslenkung des Halters bewirkt, sodass eine radiale Zustellung der Schneiden die Folge zur Erzeugung eines anderen als dem zuvor eingestellten Bohrdurchmesser. Um eine derartige zentrale Verstellung zu ermöglichen, muss jede Parallelfeder, jeder Halter, für sich mit einer Schraube und einem Druckbolzen voreingestellt werden, um Fertigungstoleranzen und eventuelle Toleranzen der Schneidblätter u.ä. auszugleichen und das Rotationswerkzeug auf einen jeweils runden Bohrdurchmesser einzustellen. Dies muss für jeden zu erzeugenden Bohrdurchmesser separat geschehen, da immer wieder beim Umstellen von einer Schneidplatte auf eine andere oder beim Auswechseln der Platte aufgrund eines Plattenbruches mit Toleranzen zu rechnen ist, zu mindestens in der hier angestrebten Genauigkeiten im *µ*m-Bereich.

Im Idealfall sind also alle Schneiden, z.B. die im Ausführungsbeispiel dargestellten 5 Schneiden am Umfang des Werkzeuges, gleichmäßig für einen Bohrdurchmesser ausgerichtet, bevor sie dann durch die zentrale Verstellvorrichtung auf 1/1000 mm genau zugestellt werden können, wenn eine Stichprobe nach dem ersten Anlaufen der Fertigung, d.h. einem ersten Anschnitt einer Bohrung zeigt, dass eine solche Verstellung erforderlich ist.

Dazu greift die Spindel einer Werkzeugmaschine über einen Stellmotor in eine Kupplung an der Werkzeugmaschinen-Seite oder Rückseite des Rotationswerkzeuges ein und verdreht die Differenzschraube um ein definiertes Maß bzw. einen definierbaren Betrag. Dieser Betrag ist von den gewählten Steigungen der Gewinde und Kegel an der Differenzschraube und dem Zustellmaß für eine Vergrößerung bzw. Verringerung des Bohrdurchmessers abhängig.

Alternativ kann der Antrieb für die Differenzschraube auch vom Kopf des Werkzeuges her erfolgen, indem die Maschine, z.B. eine Einrichtung innerhalb einer Transferstraße, gegen einen feststehenden Schraubendreher fährt und die Spindel um ein vorbestimmtes Maß dreht, welches zuvor von einem Rechner in Verbindung mit einem Schrittmotor bestimmt wurde. Auf diese Weise kann in laufenden Betrieb bei Werkzeugwechsel eine eventuell aktuell zusätzlich erforderliche Relativbewegung der Differenzschraube damit eine Durchmesseränderung erreicht wird.

Zusätzlich kann natürlich auch vorgesehen sein, dass bei stillstehender Werkzeugmaschinenspindel diese als Drehmomentstütze dient und ein Maschinenbediener vom Kopf des Werkzeuges her diese Differenzschraube mit Hilfe eines entsprechendes Werkzeuges von Hand oder motorisch dreht und so also die Differenzschraube den benötigten Weg zurücklegen kann.
Die Differenzschraube besteht im wesentlichen aus einer Welle mit zwei Außengewinden unterschiedlicher Steigung, die in zwei Hülsen mit konischen äußeren Abschnitten eingreifen. Durch Axialverschiebung der mutterartigen Hülsen zueinander wird eine mit einer kegligen oder balligen Außenkontur versehene Differenzhülse durch die mutterartigen Hülsen ein- oder ausgeschoben und dabei quer zur Achse der Differenzschraube über ein Druckstück, welches sich auf der Differenzhülse abstützt, spreizen oder zusammenziehen der Parallel-Federanordnungen konzentrisch besorgt, da die Druckstücke unter Vorspannung stehen.
Die Konizität oder Kegeligkeit der Hülsen kann so gewählt sein, dass auf jeden Fall eine definierte Differenzbewegung entsteht, wenn die Differenzschraube gedreht wird und sich Hülsenteile achsial verschieben.

Ein Problem könnte dabei ein sehr genaues Zustellen sein, wenn die Kegelteile der Hülsen relativ zur Differenzschraube nicht radial spielfrei gelagert wurden. Daher ist in einer Ausführungsform der Erfindung vorgesehen, dass die Kegelteile der Differenzschraube nach dem bewährten Lünetten-Prinzip am Umfang gelagert sind, wobei vorzugsweise mindesten einige der Lagerelemente der Lünette ebenfalls eine Vorspannung in radiale Richtung durch entsprechende Federelemente haben.
Um eine axiale Bewegung der Differenzhülse zu erreichen, muss das Kegelteil oder eine Mehrzahl von Kegelteilen aller Hülsen gegen Verdrehen durch ein entsprechendes Element, z.B. eine von außen in eine entsprechende Vertiefung einsetzbare Schraube oder ein Stift das Verdrehen der Kegelteile verhindern, also eine Drehmomentstütze bilden. Anstelle einer Lagerung nach dem Lünetten-Prinzip finden natürlich für die radiale Verspannung der Kegelteile auch für sich bekannte Federelemente Verwendung, wenn der Fachmann eine entsprechende Auswahl trifft.

Auch das Gewinde der Differenzschraube bzw. die Gewinde in den Kegelteilen relativ zu dem von der Maschinenseite oder von der Werkzeugkopfseite her zu bewegenden Elementen muß spielfrei gestaltet sein, um die

Genauigkeitsforderungen zu halten. Deshalb wird vorgesehen, daß auch das Gewinde spielfrei gemacht wird, beispielsweise durch während des Zusammenbaus einzupassende federnde Muttern mit Längsschlitzen, die auf dem Gewinde unter Spannung sitzen, so dass letztlich ein schwergängiges spielfreies Verdrehen des Gewindes erreicht wird.

Durch eine Axialfeder kann erreicht werden, dass eine Verstellung der Differenzschraube auch nur gegen Federdruck möglich ist und so bei der Umkehrung der Drehbewegung kein Spiel entsteht.

In den beigefügten Zeichnungen und Ansprüchen wird an Ausführungsbeispielen das Problem und der Vorteil der vorliegenden Erfindung erläutert.
Es zeigen:

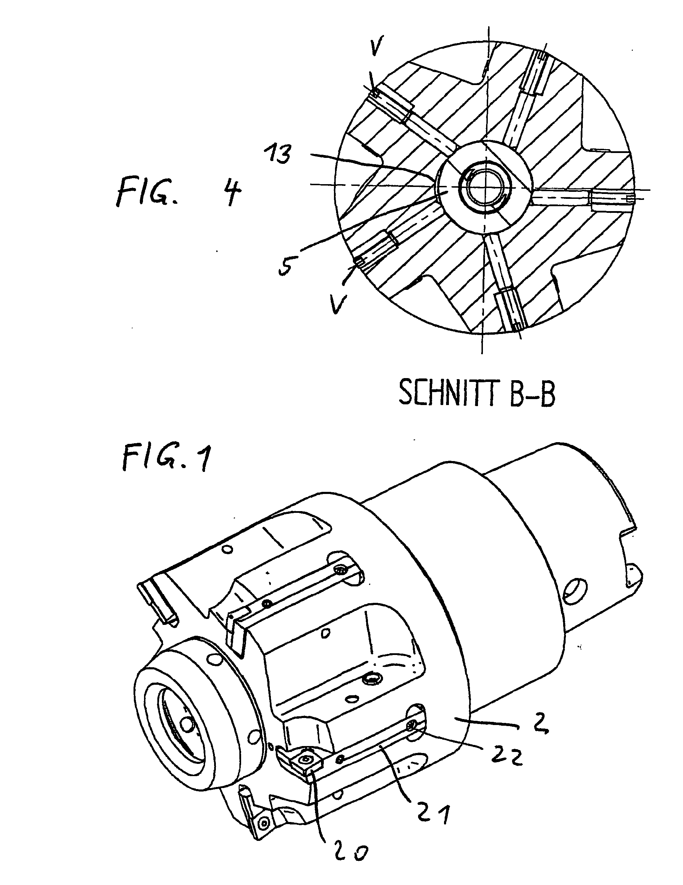

Fig. 1 eine Seitenansicht in Perspektive;

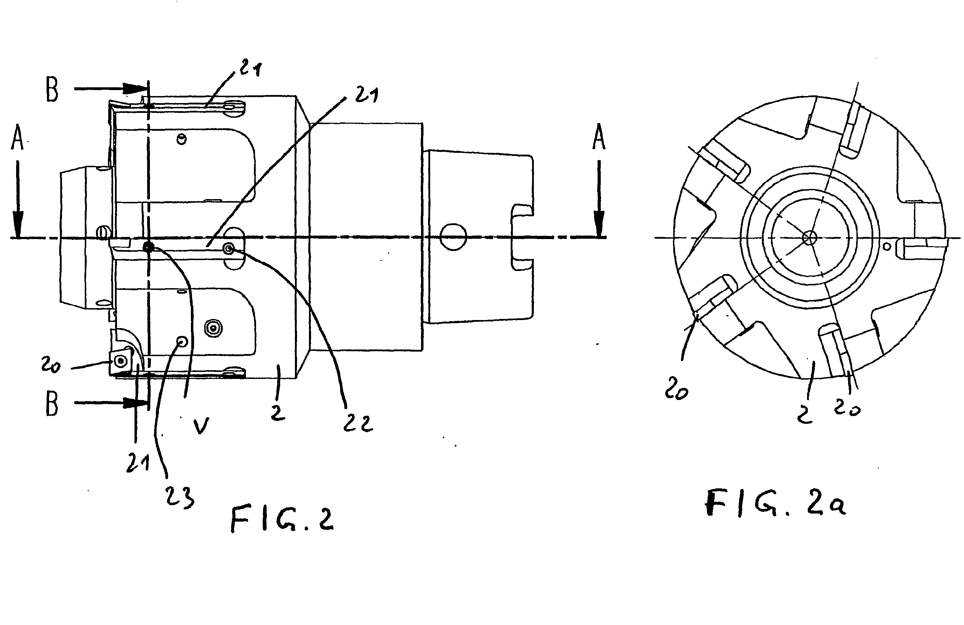

Fig. 2 eine prinzipielle Seitenansicht eines Werkzeugs mit Zentralverstellung von fünf Schneiden;
Fig. 2a eine Vorderansicht jeweils desselben Werkzeugs;
Fig. 3 Schnittlagen A-A gemäß Fig. 2 bei einer ersten Ausführungsform;
Fig. 3a und 3b Schnittlagen A'-A' bzw A"-A" analog Fig. 3 bei weiteren Ausführungsformen;
Fig. 4 einen Schnitt B-B gemäß Fig. 2;
Fig. 5 eine perspektivische Seitenansicht wie Fig. 2, jedoch für ein Werkzeug mit Einzelverstellung der fünf Schneiden.

Im Folgenden sind Teile mit identischer oder gleich wirkender Funktion mit denselben Bezugsziffem bei unterschiedlichen Bauformen zitiert.

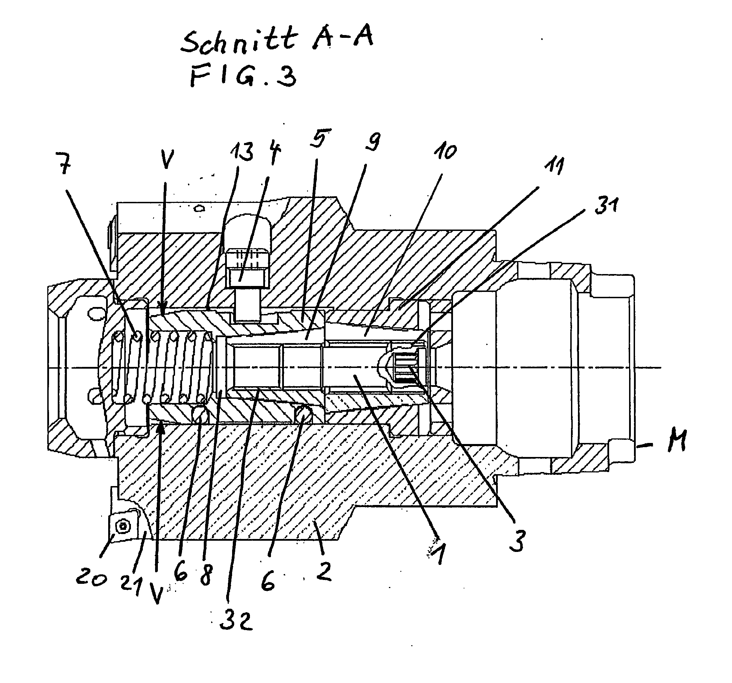

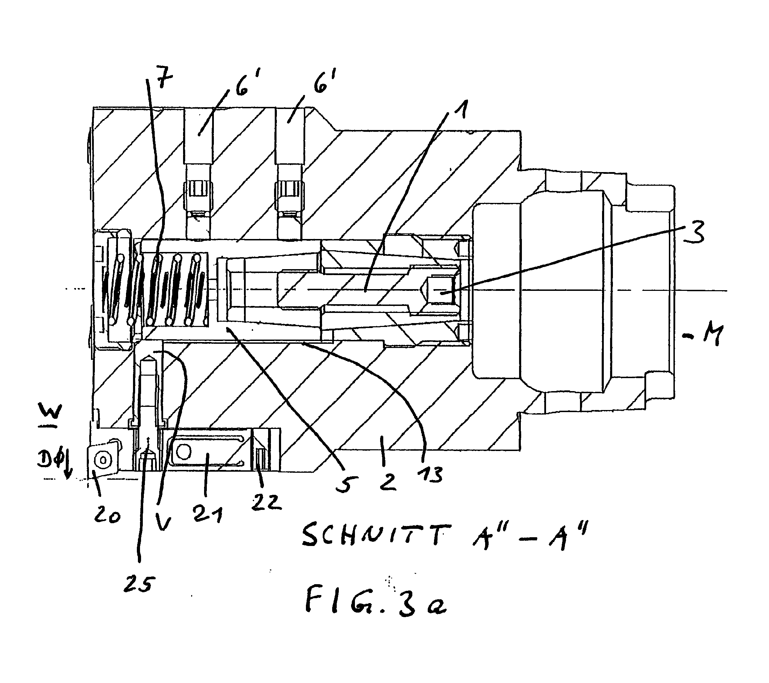

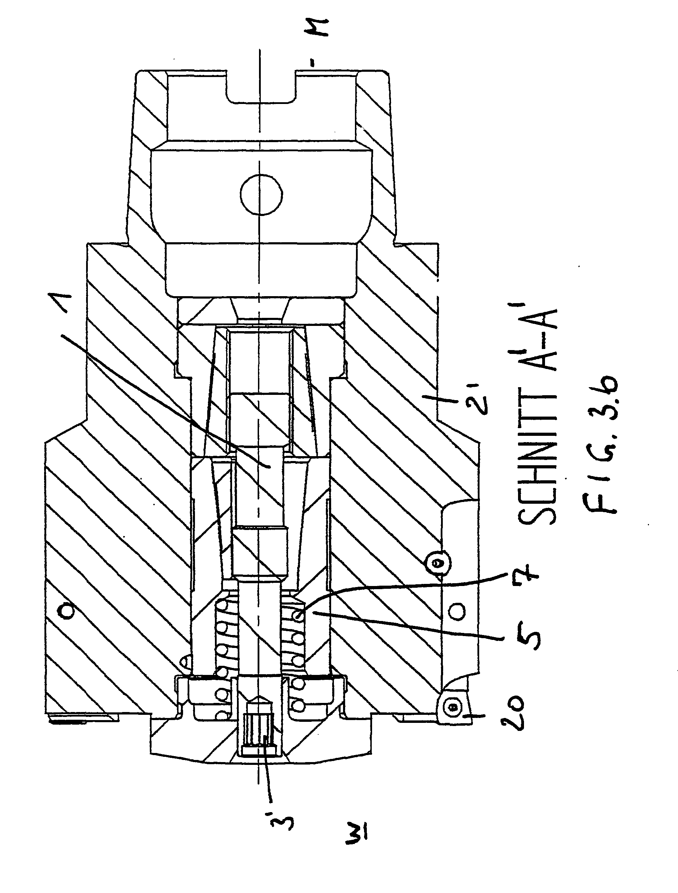

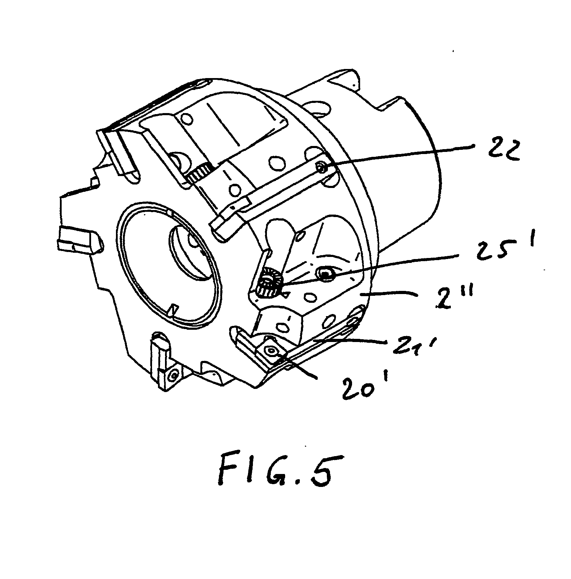

Im Werkzeugkopf 2 ist eine Differenzschraube 1 angeordnet, die axial über eine Vielkeilnut 3, in die die Spindel einer Maschine M über einen Stellmotor eingreift, rotatorisch verstellbar ist und dabei mit Gewinden 31 und 32 in komplementäre Gewinde in Kegelhülsen 9, 10 eingreift (Fig. 3). Die Gewinde haben unterschiedliche Steigung, so dass die Hülse 5, die sich wegen Mitnehmerstift 4 nur axial bewegen kann, letztlich gegen Druck der Feder 7 verschoben wird. Dabei stützt sich die Differenzschraube via Hülse 10 in Hülse 11 ab, sodass Hülse 9 und somit Hülse 5 axial je nach Drehrichtung des Stellmotors nach vom oder hinten verschoben wird; dargestellt ist die max. Auslenkung der Feder 7, bei der die Hülsen 9 und 10 aneinander liegen.
Bei der Verschiebung erfolgt an der Kegel-Außenkontur 13 der mit der Schraube verbundenen Hülse 5 eine radiale Verstellung der Druckstücke V (Pfeil V), was insbesondere in Fig. 4 zu sehen ist. Anstelle des Kegelstumpfes kann die Hülse 5 als ein Pyramidenstumpf mit einer Flächenzahl entsprechend der am Umfang des Werkzeugs eingesetzten Zahl von Schneiden ausgebildet sein.
Die Druckstücke wirken auf Halter 21, auf denen Schneidplatten 20 sitzen und verändern so den mittels der Schneidplatten zu erzeugenden Durchmesser. Anstelle der dargestellten Druckstücke können auch Excenterelemente oder Kniehebel-Elemente zur Zustellung der Schneidplatten benutzt werden, wobei die nicht immer lineare, von der Zentralverstellung bewirkte Verschiebung der Elemente automatisch über einen nicht dargestellten Rechner berechnet wird.

Über Schrauben 22 können die durch Stifte 23 fixierten Halter 21 um die Stifte gedreht und so gegen den Träger 2 im Durchmesser zur Vermeidung von Grobtoleranzen mit Vorspannung vor eingestellt werden.

Für ein genaues Zustellen wird die Differenzschraube radial spielfrei gehalten, indem die Zentralbohrung für Differenzschraube und Hülsen im Werkzeug 2 eine - hier übertrieben dargestellte - Erweiterung an der Außenkontur 13 hat, der nach dem Lünettenprinzip zwei Federelemente 6 gegenüber liegen Dadurch kann eine axiale Verschiebung der Hülse 5 stattfinden, aber kein Abheben aus dieser Lage in radialer Richtung aufgrund der Vorspannung durch die Federelemente 6. Anstelle dieser Anordnung sind auch die Hülse 5, z.B. an der Stelle 8 und / oder den Werkzeugkörper 2 durchdringende Feder-Elemente mit gleicher Wirkung einsetzbar. Die Federelemente sind in der dargestellten Lösung als in die Kegelhülse 5 eingepresste Kunststoffkugeln ausgebildet.

Auch das Gewinde an Differenzschraube 1 und Hülsen 9, 10 sollte spielfrei sein. Vorzugsweise wird dies durch konische Hülsen oder Muttern 9, 10 die gemäß Fig. 3 einen Längsschlitz haben realisiert. Die Hülsen werden in die komplementär konisch ausgebildeten äußeren Hülsen 5, 11 soweit eingeschoben, dass sie zusammengedrückt werden, sodass letztlich das Gewinde schwergängig wird; dann werden die Hülsen 9, 10 fixiert, z.B. durch nicht dargestelltes Kleben oder Verschrauben. Die Axialfeder 7 sorgt außerdem für eine Eliminierung des Umkehrspieles.

Das genaue Zustellen oder Verstellen der Schneidplatten mit Zustellraten von 1/1000 mm erfordert zudem eine tribologische Optimierung bei allen Kontaktpaarungen unter Last, die der Fachmann entsprechend zu bemessen hat. Als günstig hat sich ein Verstell-Drehmoment an der Differenzschraube von weniger als 20 Nm ergeben.

Fig. 3a zeigt eine Bauform des Werkzeugs mit dem am Werkstück W auch Planarbeiten möglich sind. Die Drückstücke V sind hier durch eine Kombination von Druckstück V mit einer Druckschraube 25 ersetzt. Die Schraube ist in Druckstück V und im Halter 21 gelagert bzw. in entsprechenden Gewinden geführt, sodass hier noch eine zusätzliche Justierung möglich ist. Das Druckstück V ist aus Bronze oder Lagermetall gestaltet; die Schraube kann je nach Stellbereich oder gewählter Zustellrate für die Schneidplatte 20 bzw. den Halter 21 zum Erreichen des gewünschten Durchmessers D mit Gewinde unterschiedlicher Steigung - auch einer Steigungsdifferenz der Gewinde - versehen sein.

Fig. 3b zeigt eine Zentralverstelleinrichtung eines fünf-schneidigen Werkzeugs, bei dem die Vielkeilnut 3' an der Seite des Werkstücks W des Werkzeugkörpers 2'angebracht ist.

Fig. 5 schließlich zeigt ein fünf-schneidiges Werkzeug 2" mit Einzelverstellung der Schneiden 20' mittels entsprechender, für sich bekannter Verstellschrauben 25'.

## Patentansprüche

1. Vielschneidiges Rotationswerkzeug für die spanabhebende Bearbeitung mit mehreren Haltern, die im vorderen Teil Aufnahmen für Schneidplatten und im Bereich zwischen ihren Enden ein Loch zum Durchtritt einer Befestigung aufweisen, mit der jeder Halter auf einem Träger festlegbar ist, wobei der Halter an seinem die Schneidplatte tragenden Teil mittels einer Verstellvorrichtung relativ zu einer Abstützung elastisch auslenkbar ist, der Halter mit einer Durchbrechung versehen ist und eine Parallel-Biegefeder- Anordnung bildet, so dass die Schneidplatte während ihrer Verstellung im wesentlichen eine Parallelverschiebung in Bezug auf die Schneidkante erfährt, **dadurch gekennzeichnet, dass** die Verstellvorrichtung als zentrale Stellschraube (1, 3, 5, 9, 10, 11, 13, 31, 32) ausgebildet ist, die an einem Teil der Schraube gemeinsam mit einer komplementären Zone am Halter ein Keilflächenpaar bildet, wobei jeder Halter (21') relativ zu seinem Träger (2') an dem der Schneidplatte (20') entgegengesetzten Ende durch eine Druckschraube (22) in seiner Position voreinstellbar ist und eine Hülse (5) der Stellschraube nach dem Lünettenprinzip am Außenumfang (13) in dem Werkzeugkörper (2,2') und in Federelementen (6, 6') radial spielfrei gelagert ist.

2. Werkzeug nach Anspruch 1, **dadurch gekennzeichnet, dass** die Teile (13) der Stellschraube, auf denen sich die Druckstücke (V) abstützen, kegelförmig ausgebildet sind.

3. Werkzeug nach Anspruch 1 oder 2, **dadurch gekennzeichnet, dass** die Teile (13) der Stellschraube, auf denen sich die Druckstücke (V) abstützen, pyramidenförmig ausgebildet sind.

4. Werkzeug nach einem der Ansprüche 1 - 3, **dadurch gekennzeichnet, dass** eine Differenzschraube (1) über eine Eingriffseinrichtung (3,3') von der Maschinenseite M oder von der Werkstückseite W her rotatorisch bewegbar ist.

5. Werkzeug nach einem der Ansprüche 1 - 4, **dadurch gekennzeichnet, dass** die Druckstücke (V) aus einem aus Bronze oder Lagermetall gefertigten Teil und einer Druckschraube (25) zusammengesetzt sind.

## Claims

1. Multiple cutting edge rotary tool for machining, the said multiple cutting edge rotary tool having a plurality of holders, which include receiving means for cutting plates in the front portion and a hole for the passage of a securing means in the region between their ends, each holder being securable on a carrier by means of the said securing means, wherein by means of an adjusting device the holder is resiliently deflectable relative to a supporting means at its portion supporting the cutting plate, the holder is provided with an opening and forms a parallel spiral spring arrangement such that, during its adjustment, the cutting plate undergoes a substantially parallel displacement with reference to the cutting edge, **characterised in that** the adjusting device is in the form of a central adjusting screw (1, 3, 5, 9, 10, 11, 13, 31, 32), which, at a portion of the screw together with a complementary zone on the holder, forms a pair of wedge faces, wherein the position of each holder (21') is pre-settable relative to its carrier (2') at the end opposite to the cutting plate (20') by means of a pressure screw (22) and a sleeve (5) of the adjusting screw is mounted so as to be radially free of play, in accordance with the steady state principle, on the outer circumference (13) in the tool body (2, 2') and in spring elements (6, 6').

2. Tool according to claim 1, **characterised in that** the parts (13) of the adjusting screw, on which the pressure pieces (V) are supported, are wedge-shaped.

3. Tool according to claim 1 or 2, **characterised in that** the parts (13) of the adjusting screw, on which the pressure pieces (V) are supported, are pyramid-shaped.

4. Tool according to one of claims 1 - 3, **characterised in that** a differential screw (1) is moveable in a rotary manner from the machine side M or from the workpiece side W by means of an engagement device (3, 3').

5. Tool according to one of claims 1 - 4, **characterised in that** the pressure pieces (V) are assembled from a part that is produced from bronze or bearing metal and a pressure screw (25).

## Revendications

1. Outil rotatif à plusieurs tranchants destiné à l'usinage par enlèvement de matière avec plusieurs porte-outils qui présentent, sur leur partie avant, des logements pour des plaquettes de coupe et entre leurs extrémités, un trou destiné au passage d'une fixation, à l'aide de laquelle chaque porte-outil peut être fixé sur un support, le porte-outil, par le biais de sa partie portant la plaquette de coupe, pouvant être fléchi de façon élastique au moyen d'un dispositif de réglage par rapport à un appui, le porte-outil étant prévu avec un perçage et forme une disposition de ressort spiral parallèle de sorte que la plaquette de coupe pendant son réglage entreprend essentiellement un déplacement parallèle par rapport à l'arête de coupe, **caractérisé en ce que** le dispositif de réglage est formé comme vis de réglage centrale (1, 3, 5, 9,10, 11, 13, 31, 32) qui forme un couple de surfaces coniques sur une partie de la vis avec une zone complémentaire sur le porte-outil, chaque porte-outil (21') pouvant être réglé à sa position par rapport à son support (2') à l'extrémité opposée à la plaquette de coupe (20') par une vis de poussée (22) et une douille (5) de la vis de réglage étant logée de façon radiale, sans jeu, selon le principe de la lunette, sur la circonférence extérieure dans le corps de l'outil (2, 2') et dans les éléments du ressort (6, 6').

2. Outil selon la revendication 1, **caractérisé en ce que** les parties (13) de la vis de serrage, sur lesquelles s'appuient les pièces de pression (V), sont de forme conique.

3. Outil selon la revendication 1 ou 2, **caractérisé en ce que** les parties (13) de la vis de serrage, sur lesquelles s'appuient les pièces de pression (V), sont de forme pyramidale.

4. Outil selon l'une des revendications 1 à 3, **caractérisé en ce qu'**une vis différentielle (1) peut être déplacée de façon rotative via un dispositif d'engagement (3, 3')du côté de la machine M ou du côté des pièces W.

5. Outil selon l'une des revendications 1 à 4, **caractérisé en ce que** les pièces de pression (V) sont composées d'une partie fabriquée en bronze ou métal antifriction et d'une vis de poussée (25).
